# EUROPÄISCHE PATENTANMELDUNG

(11) **EP 3 634 088 A1**
(43) Veröffentlichungstag der Anmeldung: **08.04.2020**
(21) Anmeldenummer: 19196701.7
(22) Anmeldetag: 11.09.2019
(51) Int. Cl.: H05B 6/12

(54) **INDUKTIONSGARGERÄTEVORRICHTUNG**

(30) Priorität: 01.10.2018 ES 201830945
(71) Anmelder: BSH Hausgeräte GmbH, 81739 München (DE)
(72) Erfinder: Hernandez Blasco, Pablo Jesus, 50019 Zaragoza (ES); Lope Moratilla, Ignacio, 50010 Zaragoza (ES); Moya Albertin, Maria Elena, 50002 Zaragoza (ES); Serrano Trullen, Javier, 50017 Zaragoza (ES)

(57) **Zusammenfassung**

Die Erfindung geht aus von einer Induktionsgargerätevorrichtung, insbesondere von einer Induktionskochfeldvorrichtung, mit zumindest einer Induktionsheizeinheit (12a-h), welche zumindest zwei Induktionsheizleitungselemente (16a-h) aufweist, die Teil zumindest einer Induktionsheizleitung (14a-h) der Induktionsheizeinheit (12a-h) sind.

Um eine gattungsgemäße Vorrichtung mit verbesserten Eigenschaften hinsichtlich einer Effizienz bereitzustellen, wird vorgeschlagen, dass sich zumindest zwei der Induktionsheizleitungselemente (16a-h) wenigstens abschnittsweise in zumindest einem Heizleitungsparameter unterscheiden.

## Beschreibung

Die Erfindung betrifft eine Induktionsgargerätevorrichtung nach dem Oberbegriff des Anspruchs 1 und ein Verfahren zu einer Montage einer Induktionsgargerätevorrichtung nach dem Anspruch 13.

Aus dem Stand der Technik ist bereits eine als Induktionskochfeldvorrichtung ausgebildete Induktionsgargerätevorrichtung bekannt mit einer Induktionsheizeinheit, welche eine Vielzahl an Induktionsheizleitungselementen aufweist. Die Induktionsheizleitungselemente sind alle identisch zueinander ausgebildet und weisen alle die gleichen Heizleitungsparameter auf, und zwar unabhängig davon, ob die Induktionsheizleitungselemente Teil einer gemeinsamen Induktionsheizleitung der Induktionsheizeinheit oder von verschiedenen Induktionsheizleitungen der Induktionsheizeinheit sind.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale der Ansprüche 1 und 13 gelöst, während vorteilhafte Ausgestaltungen und Weiterbildungen der Erfindung den Unteransprüchen entnommen werden können.

Die Erfindung geht aus von einer Induktionsgargerätevorrichtung, insbesondere von einer Induktionskochfeldvorrichtung, mit zumindest einer Induktionsheizeinheit, welche zumindest zwei Induktionsheizleitungselemente aufweist, die Teil zumindest einer Induktionsheizleitung der Induktionsheizeinheit sind.

Es wird vorgeschlagen, dass sich zumindest zwei der Induktionsheizleitungselemente wenigstens abschnittsweise und vorteilhaft über wenigstens im Wesentlichen eine gesamte Längserstreckung der Induktionsheizleitung in zumindest einem Heizleitungsparameter unterscheiden.

Durch eine derartige Ausgestaltung kann insbesondere eine hohe Effizienz erreicht werden, und zwar insbesondere hinsichtlich einer Flexibilität und/oder hinsichtlich einer Beheizung zumindest eines zu beheizenden Objekts und/oder hinsichtlich von Leitungseigenschaften der Induktionsheizleitung und/oder hinsichtlich einer Leistungsfähigkeit. Durch Induktionsheizleitungselemente mit verschiedenen Heizleitungsparametern kann insbesondere eine hohe Flexibilität und/oder eine hohe Gestaltungsfreiheit bereitgestellt werden. Insbesondere kann durch Induktionsheizleitungselemente mit verschiedenen Heizleitungsparametern ein optimales Verhältnis einer Leistungsfähigkeit eines die Induktionsgargerätevorrichtung aufweisenden Induktionsgargeräts in Bezug auf Kosten und/oder in Bezug auf ein Gewicht des Induktionsgargeräts ermöglicht werden. Durch entsprechend gewählte Heizleitungsparameter kann insbesondere ein optimaler Füllfaktor und/oder eine optimale Packungsdichte der Induktionsheizleitung erzielt werden, wodurch insbesondere geringe elektrische Verluste der Induktionsheizleitung, insbesondere im Vergleich zu einer herkömmlichen Induktionsheizleitung mit gleichem Durchmesser, und/oder eine kompakte Induktionsheizleitung erreicht werden kann.

Unter einer "Packungsdichte" eines Objekts soll insbesondere eine Kenngröße verstanden werden, welche insbesondere in einer insbesondere beliebigen Querschnittsfläche des Objekts, die insbesondere senkrecht zu einer Längsrichtung des Objekts ausgerichtet ist, durch einen Quotient aus einer Fläche an elektrisch leitendem Material des Objekts und einer Gesamtfläche des Objekts definiert ist.

Unter einer "Induktionsgargerätevorrichtung", insbesondere unter einer "Induktionskochfeldvorrichtung", soll insbesondere zumindest ein Teil, insbesondere eine Unterbaugruppe, eines Induktionsgargeräts, insbesondere eines Induktionskochfelds, verstanden werden. Ein die Induktionsgargerätevorrichtung aufweisendes Induktionsgargerät könnte beispielsweise ein Induktionsgrill sein. Insbesondere könnte die Induktionsgargerätevorrichtung eine Induktionsgrillvorrichtung sein. Alternativ oder zusätzlich könnte ein die Induktionsgargerätevorrichtung aufweisendes Induktionsgargerät beispielsweise ein Induktionsofen sein. Insbesondere könnte die Induktionsgargerätevorrichtung eine Induktionsofenvorrichtung sein. Unter einem "Ofen" soll insbesondere ein Gargerät verstanden werden, welches zumindest eine Muffel zu einer Garung von Lebensmitteln aufweist. Beispielsweise könnte der Ofen ein Backofen und/oder ein Herd sein. Vorzugsweise ist ein die Induktionsgargerätevorrichtung aufweisendes Induktionsgargerät ein Induktionskochfeld. Insbesondere ist die Induktionsgargerätevorrichtung eine Induktionskochfeldvorrichtung.

Insbesondere weist die Induktionsgargerätevorrichtung zumindest zwei, insbesondere zumindest drei, vorteilhaft zumindest vier, besonders vorteilhaft zumindest acht, vorzugsweise zumindest zwölf und besonders bevorzugt eine Vielzahl an Induktionsheizeinheiten auf.

Unter einer "Induktionsheizeinheit" soll in diesem Zusammenhang insbesondere eine Einheit verstanden werden, welche insbesondere zumindest eine Induktionsheizleitung aufweist und welche insbesondere dazu vorgesehen ist, in wenigstens einem Betriebszustand, insbesondere mittels der Induktionsheizleitung, zumindest einem zu beheizenden Objekt Energie, insbesondere in Form eines elektromagnetischen Wechselfelds, zum Zweck einer Beheizung des zu beheizenden Objekts zuzuführen, wobei die dem beheizenden Objekt zugeführte Energie insbesondere in dem beheizenden Objekt in Wärme umgewandelt werden könnte. Insbesondere ist die Induktionsheizleitung der Induktionsheizeinheit in wenigstens einem Betriebszustand zu zumindest einer Spule gewickelt.

Beispielsweise könnte die Induktionsgargerätevorrichtung das zu beheizende Objekt aufweisen. Zumindest ein zu beheizendes Objekt könnte beispielsweise eine Wandung sein, wie beispielsweise eine Muffelwandung, und insbesondere einen Garraum wenigstens teilweise begrenzen. Alternativ oder zusätzlich könnte zumindest ein zu beheizendes Objekt insbesondere ein Gargeschirr sein.

Die Induktionsheizeinheit könnte beispielsweise zumindest zwei, insbesondere zumindest drei, vorteilhaft zumindest vier, besonders vorteilhaft zumindest fünf, vorzugsweise zumindest sechs und besonders bevorzugt mehrere Induktionsheizleitungen aufweisen. Insbesondere könnten zumindest zwei der, insbesondere zumindest ein Großteil der und vorteilhaft alle der Induktionsheizleitungen der Induktionsheizeinheit in wenigstens einem Betriebszustand wenigstens abschnittsweise und vorteilhaft über wenigstens im Wesentlichen eine gesamte Längserstreckung zumindest einer der Induktionsheizleitungen miteinander verdrillt sein. Insbesondere könnten zumindest zwei der, insbesondere zumindest ein Großteil der und vorteilhaft alle der Induktionsheizleitungen in Längsrichtung zumindest einer der Induktionsheizleitungen azimutal und radial gewickelt und/oder miteinander verdrillt sein. Zumindest zwei der, insbesondere zumindest ein Großteil der und vorteilhaft alle der Induktionsheizleitungen könnten insbesondere litzendrahtartig gewickelt und/oder miteinander verdrillt sein. Insbesondere weist die Induktionsheizeinheit genau eine Induktionsheizleitung auf.

Unter einer "Induktionsheizleitung" soll insbesondere ein Objekt verstanden werden, welches in wenigstens einem Betriebszustand elektrischen Strom führt und welches insbesondere dazu vorgesehen ist, mittels des elektrischen Stroms eine von der Induktionsheizeinheit bereitgestellte Energie wenigstens zu einem Großteil bereitzustellen. Insbesondere überträgt die Induktionsheizleitung in wenigstens einem Betriebszustand mittels der Induktionsheizleitungselemente, insbesondere mittels eines von den Induktionsheizleitungselementen bereitgestellten elektromagnetischen Wechselfelds, Energie, insbesondere elektromagnetische Energie, an zumindest ein zu beheizendes Objekt, und zwar insbesondere zum Zweck einer induktiven Beheizung des zu beheizenden Objekts.

Vorteilhaft weist die Induktionsheizeinheit und/oder die Induktionsheizleitung zumindest drei, insbesondere zumindest vier, vorteilhaft zumindest sechs, besonders vorteilhaft zumindest zehn, vorzugsweise zumindest fünfzehn und besonders bevorzugt eine Vielzahl an Induktionsheizleitungselementen auf.

Unter einem "Induktionsheizleitungselement" soll insbesondere ein Bestandteil der Induktionsheizeinheit und/oder der Induktionsheizleitung verstanden werden, welcher insbesondere zumindest eine Induktionsheizleitung der Induktionsheizeinheit wenigstens teilweise definiert und welcher insbesondere wenigstens teilweise und vorteilhaft wenigstens zu einem Großteil aus elektrisch leitfähigem Material besteht und welcher insbesondere dazu vorgesehen ist, in wenigstens einem Betriebszustand einen bestimmten Bruchteil des von der Induktionsheizeinheit und/oder von der Induktionsheizleitung bereitgestellten elektromagnetischen Felds und/oder der von der Induktionsheizeinheit und/oder von der Induktionsheizleitung bereitgestellten Energie bereitzustellen. Hierbei ist der bestimmte Bruchteil insbesondere durch eine Anzahl an Induktionsheizleitungselementen, welche die Induktionsheizeinheit und/oder die Induktionsheizleitung aufweist, und/oder durch den Heizleitungsparameter der Induktionsheizleitungselemente definiert. Der bestimmte Bruchteil hängt vorteilhaft von einem Wert eines Verhältnisses von der Zahl eins und der Anzahl der Induktionsheizleitungselementen der Induktionsheizeinheit und/oder der Induktionsheizleitung ab. Insbesondere hängt der bestimmte Bruchteil von dem Heizleitungsparameter und einer Anzahl an Induktionsheizleitungselementen mit einem bestimmten Heizleitungsparameter ab.

Insbesondere sind die Induktionsheizleitungselemente der Induktionsheizeinheit, welche insbesondere Teil einer gemeinsamen Induktionsheizleitung der Induktionsheizeinheit sind, jeweils gegeneinander elektrisch isoliert, vorzugsweise durch eine elektrische Isolierung, insbesondere eine Lackierung, der jeweiligen Induktionsheizleitungselemente, welche insbesondere einen elektrischen Leiter der Induktionsheizleitungselemente in Umfangsrichtung und in Längsrichtung vorzugsweise vollständig umgibt. Alternativ könnte zumindest eines der, insbesondere zumindest ein Großteil der und vorteilhaft alle der Induktionsheizleitungselemente wenigstens abschnittsweise und vorteilhaft über wenigstens im Wesentlichen eine gesamte Längserstreckung der Induktionsheizleitung in zumindest einem Randbereich des Induktionsheizleitungselements wenigstens zu einem Großteil aus zumindest einem Randmaterial bestehen, das zumindest ein Metall aufweisen könnte. In dem Randbereich könnte das Induktionsheizleitungselement insbesondere wenigstens zu einem Großteil aus einem Metall und/oder aus einer Metalllegierung und/oder aus einem Metalloxid ausgebildet sein.

Unter der Wendung "wenigstens ein Großteil" der Objekte einer Einheit soll insbesondere eine Anzahl von mindestens 70 %, insbesondere von mindestens 75 %, vorteilhaft von mindestens 80 %, besonders vorteilhaft von mindestens 85 %, vorzugsweise von mindestens 90 % und besonders bevorzugt von mindestens 95 % aller Objekte der Einheit verstanden werden. Unter einer "Längsrichtung" eines Objekts, insbesondere der Induktionsheizleitung und/oder zumindest eines der Induktionsheizleitungselemente, soll insbesondere eine Richtung verstanden werden, die bei einer geraden Abwicklung des Objekts parallel zu einer längsten Seite eines kleinsten gedachten geometrischen Quaders ausgerichtet ist, der das Objekt gerade noch umschließt. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Die Induktionsheizeinheit und/oder die Induktionsheizleitung weist/weisen insbesondere zumindest zwei Induktionsheizleitungselemente auf, welche identisch zueinander ausgebildet sind und welche insbesondere identische Heizleitungsparameter aufweisen. Insbesondere sind ein Anteil von mindestens 10 %, insbesondere von mindestens 20 %, vorteilhaft von mindestens 30 %, besonders voreilhaft von mindestens 40 %, vorzugsweise von mindestens 45 % und besonders bevorzugt von mindestens 50 % der Induktionsheizleitungselemente der Induktionsheizeinheit und/oder der Induktionsheizleitung, insbesondere einer Anzahl an Induktionsheizleitungselementen der Induktionsheizeinheit und/oder der Induktionsheizleitung, identisch ausgebildet und weisen insbesondere identische Heizleitungsparameter auf.

Insbesondere im Fall von zumindest zwei Induktionsheizleitungselementen, welche identisch zueinander ausgebildet sind und welche insbesondere identische Heizleitungsparameter aufweisen, ist der bestimmte Bruchteil für diese Induktionsheizleitungselemente insbesondere wenigstens im Wesentlichen und vorteilhaft vollständig identisch. Unter der Wendung, dass der bestimmte Bruchteil "wenigstens im Wesentlichen" identisch ist, soll insbesondere verstanden werden, dass der bestimmte Bruchteil unter Berücksichtigung von Fertigungstoleranzen identisch ist.

Insbesondere unterscheidet sich ein Anteil von mindestens 10 %, insbesondere von mindestens 20 %, vorteilhaft von mindestens 30 %, besonders vorteilhaft von mindestens 40 %, vorzugsweise von mindestens 45 % und besonders bevorzugt von mindestens 50 % der Induktionsheizleitungselemente der Induktionsheizeinheit und/oder der Induktionsheizleitung, insbesondere einer Anzahl an Induktionsheizleitungselementen der Induktionsheizeinheit und/oder der Induktionsheizleitung, welche insbesondere Teil einer gemeinsamen Induktionsheizleitung und/oder von verschiedenen Induktionsheizleitungen sind, von restlichen Induktionsheizleitungselementen der Induktionsheizeinheit und/oder der Induktionsheizleitung, welche insbesondere Teil der gemeinsamen Induktionsheizleitung und/oder von verschiedenen Induktionsheizleitungen sind, in zumindest einem Heizleitungsparameter.

Unter der Wendung "wenigstens abschnittsweise" soll insbesondere über einen Anteil von mindestens 10 %, insbesondere von mindestens 30 %, vorteilhaft von mindestens 50 %, besonders vorteilhaft von mindestens 70 %, vorzugsweise von mindestens 80 % und besonders bevorzugt von mindestens 90 % einer Längserstreckung eines Objekts, insbesondere der Induktionsheizleitung und/oder zumindest eines der Induktionsheizleitungselemente, verstanden werden. Unter einer "Längserstreckung" eines Objekts soll insbesondere eine Erstreckung in Längsrichtung des Objekts verstanden werden. Unter einer "Erstreckung" eines Objekts soll bei einer geraden Abwicklung des Objekts insbesondere ein maximaler Abstand zweier Punkte einer senkrechten Projektion des Objekts auf eine Ebene verstanden werden.

Unter einem "Heizleitungsparameter" eines Objekts, insbesondere der Induktionsheizleitung und/oder zumindest eines der Induktionsheizleitungselemente, soll insbesondere ein Parameter verstanden werden, welcher zumindest eine intrinsische Eigenschaft des Objekts definiert und/oder charakterisiert. Beispielsweise könnte zumindest ein Heizleitungsparameter eine elektrische Leitfähigkeit des Objekts sein. Zumindest ein Heizleitungsparameter könnte beispielsweise eine thermische Leitfähigkeit des Objekts sein. Beispielsweise könnte zumindest ein Heizleitungsparameter ein Material des Objekts sein. Zumindest ein Heizleitungsparameter könnte beispielsweise eine maximale Quererstreckung, insbesondere ein Durchmesser, des Objekts sein. Beispielsweise könnte zumindest ein Heizleitungsparameter eine Schmelztemperatur des Objekts sein.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Beispielsweise könnten die Induktionsheizleitungselemente, welche sich in zumindest einem Heizleitungsparameter unterscheiden, Teil von zumindest zwei insbesondere verschiedenen Induktionsheizleitungen der Induktionsheizeinheit sein. Zumindest eine der, insbesondere wenigstens ein Großteil der und vorzugsweise jede der Induktionsheizleitungen der Induktionsheizeinheit könnte beispielsweise, insbesondere ausschließlich, Induktionsheizleitungselemente mit identischen Heizleitungsparametern aufweisen. Vorzugsweise sind die Induktionsheizleitungselemente, welche sich insbesondere in zumindest einem Heizleitungsparameter unterscheiden, Teil einer gemeinsamen Induktionsheizleitung der Induktionsheizeinheit. Insbesondere weist die Induktionsheizleitung zumindest zwei Induktionsheizleitungselemente auf, welche sich in zumindest einem Heizleitungsparameter unterscheiden. Dadurch kann insbesondere eine effiziente Induktionsheizleitung bereitgestellt werden.

Ferner wird vorgeschlagen, dass sich zumindest zwei der Induktionsheizleitungselemente wenigstens abschnittsweise und vorteilhaft über wenigstens im Wesentlichen eine gesamte Längserstreckung der Induktionsheizleitung in zumindest einer maximalen Quererstreckung, insbesondere in zumindest einem Durchmesser, unterscheiden. Insbesondere ist zumindest ein Heizleitungsparameter zumindest eine maximale Quererstreckung, insbesondere zumindest ein Durchmesser, der Induktionsheizleitungselemente. Unter einer "maximalen Querstreckung" eines Objekts soll insbesondere eine maximale Erstreckung des Objekts in einer Querschnittsebene verstanden werden, welche senkrecht zu einer Längsrichtung des Objekts ausgerichtet ist. Vorteilhaft weisen die Induktionsheizleitungselemente in der Querschnittsebene eine kreisartige Gestalt auf. Die maximale Quererstreckung der Induktionsheizleitungselemente, welche in der Querschnittsebene insbesondere eine kreisartige Gestalt aufweisen, ist insbesondere ein Durchmesser der Induktionsheizleitungselemente. Dadurch kann insbesondere ein optimaler Füllfaktor und/oder eine optimale Packungsdichte der Induktionsheizleitung erzielt werden, da insbesondere in Lücken zwischen Induktionsheizleitungselementen mit großer maximaler Quererstreckung Induktionsheizleitungselemente mit kleiner maximaler Quererstreckung angeordnet werden können.

Zudem wird vorgeschlagen, dass zumindest eines der Induktionsheizleitungselemente, insbesondere zumindest ein erstes der Induktionsheizleitungselemente, wenigstens abschnittsweise und vorteilhaft über wenigstens im Wesentlichen eine gesamte Längserstreckung der Induktionsheizleitung eine maximale Quererstreckung, insbesondere einen Durchmesser, von maximal 0,25 mm, insbesondere von maximal 0,24 mm, vorteilhaft von maximal 0,22 mm, besonders vorteilhaft von maximal 0,2 mm und vorzugsweise von maximal 0,18 mm aufweist. Dadurch können insbesondere geringe elektrische Verluste, welche insbesondere aus einem Proximity-Effekt resultieren könnten, erreicht werden. Insbesondere kann eine kompakte Ausgestaltung erzielt werden. Es können insbesondere Induktionsheizleitungselemente bereitgestellt werden, welche sich vorteilhaft für Induktionsheizeinheiten eignen, die bei einer senkrechten Betrachtung auf eine Haupterstreckungsebene der Induktionsheizeinheit eine kleine maximale Erstreckung aufweisen.

Weiterhin wird vorgeschlagen, dass zumindest eines der Induktionsheizleitungselemente, insbesondere zumindest ein von dem ersten Induktionsheizleitungselement verschiedenes zweites der Induktionsheizleitungselemente, wenigstens abschnittsweise und vorteilhaft über wenigstens im Wesentlichen eine gesamte Längserstreckung der Induktionsheizleitung eine maximale Quererstreckung, insbesondere einen Durchmesser, von mindestens 0,26 mm, insbesondere von mindestens 0,28 mm, vorteilhaft von mindestens 0,3 mm, besonders vorteilhaft von mindestens 0,35 mm und vorzugsweise von mindestens 0,4 mm aufweist. Dadurch können insbesondere geringe Kosten erreicht werden. Insbesondere kann ein einfaches und/oder unkompliziertes Verfahren zu einer Montage einer Induktionsgargerätevorrichtung ermöglicht werden, und zwar insbesondere aufgrund einer guten Handhabbarkeit der Induktionsheizleitungselemente. Es können insbesondere Induktionsheizleitungselemente bereitgestellt werden, welche sich vorteilhaft für Induktionsheizeinheiten eignen, die bei einer senkrechten Betrachtung auf eine Haupterstreckungsebene der Induktionsheizeinheit eine große maximale Erstreckung aufweisen.

Beispielsweise könnten sich die Induktionsheizleitungselemente wenigstens abschnittsweise und vorteilhaft über wenigstens im Wesentlichen eine gesamte Längserstreckung der Induktionsheizleitung lediglich in einem Heizleitungsparameter unterscheiden. Insbesondere könnte der Heizleitungsparameter eine maximale Quererstreckung der Induktionsheizleitungselemente sein. Vorzugsweise unterscheiden sich zumindest zwei der Induktionsheizleitungselemente wenigstens abschnittsweise und vorteilhaft über wenigstens im Wesentlichen eine gesamte Längserstreckung der Induktionsheizleitung in zumindest zwei Heizleitungsparametern. Beispielsweise könnten sich zumindest zwei der Induktionsheizleitungselemente wenigstens abschnittsweise und vorteilhaft über wenigstens im Wesentlichen eine gesamte Längserstreckung der Induktionsheizleitung in einer elektrischen Leitfähigkeit und/oder in einer thermischen Leitfähigkeit und/oder in einer Schmelztemperatur unterscheiden. Vorzugsweise unterscheiden sich zumindest zwei der Induktionsheizleitungselemente wenigstens abschnittsweise und vorteilhaft über wenigstens im Wesentlichen eine gesamte Längserstreckung der Induktionsheizleitung in zumindest einem Material. Insbesondere ist zumindest ein Heizleitungsparameter ein Material der Induktionsheizleitungselemente. Unter einem "Material eines Induktionsheizleitungselements" soll hier und im Folgenden ein Material eines elektrisch leitfähigen Bestandteils des Induktionsheizleitungselements, insbesondere unter Vernachlässigung eines elektrisch isolierenden Bestandteils des Induktionsheizleitungselements, verstanden werden. Dadurch kann insbesondere eine hohe Flexibilität und/oder eine hohe Gestaltungsfreiheit erzielt werden.

Zudem wird vorgeschlagen, dass zumindest eines der Induktionsheizleitungselemente wenigstens abschnittsweise und vorteilhaft über wenigstens im Wesentlichen eine gesamte Längserstreckung der Induktionsheizleitung wenigstens zu einem Großteil aus Kupfer und/oder Aluminium besteht. Beispielsweise könnte zumindest eines der Induktionsheizleitungselemente wenigstens abschnittsweise und vorteilhaft über wenigstens im Wesentlichen eine gesamte Längserstreckung der Induktionsheizleitung wenigstens zu einem Großteil aus Kupfer bestehen. Alternativ oder zusätzlich könnte zumindest eines der Induktionsheizleitungselemente beispielsweise wenigstens abschnittsweise und vorteilhaft über wenigstens im Wesentlichen eine gesamte Längserstreckung der Induktionsheizleitung wenigstens zu einem Großteil aus Aluminium bestehen. Zumindest eines der Induktionsheizleitungselemente könnte beispielsweise wenigstens abschnittsweise und vorteilhaft über wenigstens im Wesentlichen eine gesamte Längserstreckung der Induktionsheizleitung wenigstens zu einem Großteil aus Aluminium mit Kupferbeschichtung bestehen. Dadurch können insbesondere optimale Leitungseigenschaften der Induktionsheizleitung erreicht werden. Insbesondere kann für ein Induktionsheizleitungselement, welches wenigstens abschnittsweise und vorteilhaft über wenigstens im Wesentlichen eine gesamte Längserstreckung der Induktionsheizleitung wenigstens zu einem Großteil aus Aluminium besteht, ein geringes Gewicht und/oder geringe Kosten erzielt werden. Insbesondere können für ein Induktionsheizleitungselement, welches wenigstens abschnittsweise und vorteilhaft über wenigstens im Wesentlichen eine gesamte Längserstreckung der Induktionsheizleitung wenigstens zu einem Großteil aus Kupfer besteht, geringe elektrische Verluste erzielt werden.

Beispielsweise könnte sich zumindest eines der Induktionsheizleitungselemente über einen Anteil von maximal 90 %, insbesondere von maximal 80 %, vorteilhaft von maximal 60 %, besonders vorteilhaft von maximal 40 %, vorzugsweise von maximal 20 % und besonders bevorzugt von maximal 10 % einer Längserstreckung der Induktionsheizleitung erstrecken. Vorzugsweise erstreckt sich zumindest eines der, insbesondere zumindest ein Großteil der und vorteilhaft alle der Induktionsheizleitungselemente über wenigstens im Wesentlichen eine gesamte Längserstreckung der Induktionsheizleitung. Unter der Wendung über "wenigstens im Wesentlichen" eine gesamte Längserstreckung eines Objekts, insbesondere der Induktionsheizleitung, soll insbesondere über einen Anteil von mindestens 70 %, insbesondere von mindestens 80 %, vorteilhaft von mindestens 85 %, besonders vorteilhaft von mindestens 90 %, vorzugsweise von mindestens 95 % und besonders bevorzugt von mindestens 97 % einer gesamten Längserstreckung des Objekts, insbesondere der Induktionsheizleitung, verstanden werden. Dadurch kann Energie insbesondere gleichmäßig über eine gesamte Längserstreckung der Induktionsheizleitung verteilt bereitgestellt werden, wodurch insbesondere ein zu beheizendes Objekt vorteilhaft beheizt und/oder optimale Garergebnisse erzielt werden können.

Ferner wird vorgeschlagen, dass zumindest zwei der, insbesondere zumindest ein Großteil der und vorteilhaft alle der Induktionsheizleitungselemente in wenigstens einem Betriebszustand wenigstens abschnittsweise und vorteilhaft über wenigstens im Wesentlichen eine gesamte Längserstreckung der Induktionsheizleitung miteinander verdrillt sind. Insbesondere sind zumindest zwei der, insbesondere zumindest ein Großteil der und vorteilhaft alle der Induktionsheizleitungselemente in Längsrichtung der Induktionsheizleitung azimutal und radial gewickelt und/oder miteinander verdrillt. Die Induktionsheizleitungselemente könnten insbesondere litzendrahtartig gewickelt und/oder miteinander verdrillt sein. Zumindest eines der, insbesondere zumindest ein Großteil der und vorteilhaft alle der Induktionsheizleitungselemente nimmt in Längserstreckungsrichtung der Induktionsheizleitung betrachtet insbesondere radial zumindest zwei verschiedene Positionen ein. Zumindest eines der, insbesondere zumindest ein Großteil der und vorteilhaft alle der Induktionsheizleitungselemente nimmt in Längserstreckungsrichtung der Induktionsheizleitung betrachtet insbesondere azimutal zumindest zwei verschiedene Positionen ein. Insbesondere sind zumindest zwei der, insbesondere zumindest ein Großteil der und vorteilhaft alle der Induktionsheizleitungselemente in wenigstens einem Betriebszustand wenigstens abschnittsweise und vorteilhaft über wenigstens im Wesentlichen eine gesamte Längserstreckung der Induktionsheizleitung litzendrahtartig angeordnet und/oder gewickelt und/oder miteinander verdrillt. Dadurch können insbesondere optimale Beheizungseigenschaften und/oder geringe elektrische Verluste erreicht werden.

Zudem wird vorgeschlagen, dass die Induktionsheizleitung in zumindest einer, insbesondere beliebigen Querschnittsebene, welche insbesondere senkrecht zu einer Längsrichtung der Induktionsheizleitung ausgerichtet ist, eine kreisartige Gestalt aufweist. Unter einer "kreisartigen" Gestalt eines Objekts soll insbesondere verstanden werden, dass das Objekt einen kleinsten gedachten geometrischen Kreis, welcher das Objekt gerade noch umschließt, insbesondere in der Querschnittsebene, zu einem Flächenanteil von mindestens 85 %, insbesondere von mindestens 90 %, vorteilhaft von mindestens 92 %, besonders vorteilhaft von mindestens 95 %, vorzugsweise von mindestens 97 % und besonders bevorzugt von mindestens 99 % einer Gesamtfläche des Kreises in der Querschnittsebene ausfüllt und/oder dass ein größter gedachter geometrischer Kreis, welcher das Objekt maximal ausfüllt und/oder welcher dem Objekt gerade noch einbeschrieben werden kann, das Objekt, insbesondere in der Querschnittsebene, zu einem Flächenanteil von mindestens 85 %, insbesondere von mindestens 90 %, vorteilhaft von mindestens 92 %, besonders vorteilhaft von mindestens 95 %, vorzugsweise von mindestens 97 % und besonders bevorzugt von mindestens 99 % einer Gesamtfläche des Objekts in der Querschnittsebene ausfüllt. Insbesondere weist die Induktionsheizleitung in wenigstens einem Großteil aller und vorteilhaft in jeder Querschnittsebene(n), welche insbesondere senkrecht zu einer Längsrichtung der Induktionsheizleitung ausgerichtet ist/sind, eine kreisartige Gestalt auf. Dadurch kann insbesondere eine einfache Herstellung der Induktionsheizleitung ermöglicht werden.

Ferner wird vorgeschlagen, dass die Induktionsheizleitung in zumindest einer, insbesondere beliebigen Querschnittsebene, welche insbesondere senkrecht zu einer Längsrichtung der Induktionsheizleitung ausgerichtet ist, eine rechteckartige Gestalt aufweist. Unter einer "rechteckartigen" Gestalt eines Objekts soll insbesondere verstanden werden, dass das Objekt ein kleinstes gedachtes geometrisches Rechteck, welches das Objekt gerade noch umschließt, insbesondere in der Querschnittsebene, zu einem Flächenanteil von mindestens 85 %, insbesondere von mindestens 90 %, vorteilhaft von mindestens 92 %, besonders vorteilhaft von mindestens 95 %, vorzugsweise von mindestens 97 % und besonders bevorzugt von mindestens 99 % einer Gesamtfläche des Rechtecks in der Querschnittsebene ausfüllt und/oder dass ein größtes gedachtes geometrisches Rechteck, welches das Objekt maximal ausfüllt und/oder welches dem Objekt gerade noch einbeschrieben werden kann, das Objekt, insbesondere in der Querschnittsebene, zu einem Flächenanteil von mindestens 85 %, insbesondere von mindestens 90 %, vorteilhaft von mindestens 92 %, besonders vorteilhaft von mindestens 95 %, vorzugsweise von mindestens 97 % und besonders bevorzugt von mindestens 99 % einer Gesamtfläche des Objekts in der Querschnittsebene ausfüllt. Insbesondere weist die Induktionsheizleitung in wenigstens einem Großteil aller und vorteilhaft in jeder Querschnittsebene(n), welche insbesondere senkrecht zu einer Längsrichtung der Induktionsheizleitung ausgerichtet ist/sind, eine rechteckartige Gestalt auf. Dadurch kann insbesondere eine besonders hohe Packungsdichte der Induktionsheizeinheit erzielt werden, wodurch vorteilhafte Beheizungseigenschaften und/oder eine kompakte Ausgestaltung erreicht werden können.

Durch geeignete Wahl und/oder Anpassung des Heizleitungsparameters können insbesondere Eigenschaften und/oder Vorteile der Induktionsheizeinheit und/oder der Induktionsheizleitung und/oder der Induktionsheizleitungselemente eingestellt und/oder angepasst und/oder optimiert werden. Eigenschaften und/oder Vorteile könnten beispielsweise ein Gewicht und/oder Herstellungskosten und/oder eine Leistungsfähigkeit, welche insbesondere durch elektrische Verluste und/oder durch einen elektrischen Widerstand charakterisiert sein könnte, sein. Je höher insbesondere ein Massenanteil an Aluminium und/oder ein Volumenanteil an Aluminium und/oder eine Anzahl an Induktionsheizleitungselementen, welche wenigstens zu einem Großteil aus Aluminium bestehen, desto geringer ein Gewicht und/oder desto geringer Herstellungskosten und/oder desto höher elektrische Verluste. Je höher insbesondere ein Massenanteil an Kupfer und/oder ein Volumenanteil an Kupfer und/oder eine Anzahl an Induktionsheizleitungselementen, welche wenigstens zu einem Großteil aus Kupfer bestehen, desto höher ein Gewicht und/oder desto höher Herstellungskosten und/oder geringer elektrische Verluste. Je höher insbesondere ein Massenanteil und/oder ein Volumenanteil und/oder eine Anzahl an Induktionsheizleitungselementen, welche eine hohe maximale Quererstreckung und/oder eine maximale Quererstreckung von mindestens 0,26 mm aufweisen, desto geringer Herstellungskosten und/oder desto höher elektrische Verluste, welche insbesondere durch den Proximity-Effekt resultieren. Je höher insbesondere ein Massenanteil und/oder ein Volumenanteil und/oder eine Anzahl an Induktionsheizleitungselementen, welche eine geringe maximale Quererstreckung und/oder eine maximale Quererstreckung von maximal 0,25 mm aufweisen, desto höher Herstellungskosten und/oder desto geringer elektrische Verluste, welche insbesondere durch den Proximity-Effekt resultieren. Insbesondere sind Induktionsheizleitungselemente, welche eine geringe maximale Quererstreckung und/oder eine maximale Quererstreckung von maximal 0,25 mm aufweisen, wesentlich teurer als Induktionsheizleitungselemente, welche eine hohe maximale Quererstreckung und/oder eine maximale Quererstreckung von mindestens 0,26 mm aufweisen.

Induktionsheizleitungselemente, welche wenigstens zu einem Großteil aus Aluminium bestehen, sind, insbesondere bei ansonsten gleichen Heizleitungsparametern, insbesondere billiger, insbesondere im Wesentlichen dreifach bis vierfach billiger, als Induktionsheizleitungselemente, welche wenigstens zu einem Großteil aus Kupfer bestehen. Induktionsheizleitungselemente, welche wenigstens zu einem Großteil aus Aluminium bestehen, sind, insbesondere bei ansonsten gleichen Heizleitungsparametern, insbesondere leichter, insbesondere im Wesentlichen dreimal so leicht, als Induktionsheizleitungselemente, welche wenigstens zu einem Großteil aus Kupfer bestehen. Auf Basis dieser Erkenntnisse kann insbesondere ein Verhältnis an Materialien, insbesondere an Kupfer und Aluminium, optimiert werden, und zwar insbesondere durch geeignete Wahl und/oder Anpassung eines Mengenverhältnisses an Materialien, insbesondere an Kupfer und Aluminium, um insbesondere elektrische Verluste und gleichzeitig Kosten und Gewicht gering zu halten.

Eine besonders hohe Effizienz kann insbesondere erreicht werden durch ein Induktionsgargerät, insbesondere durch ein Induktionskochfeld, mit zumindest einer erfindungsgemäßen Induktionsgargerätevorrichtung.

Eine Effizienz kann insbesondere optimiert werden durch ein Verfahren zu einer Montage einer erfindungsgemäßen Induktionsgargerätevorrichtung, bei welchem zumindest zwei Induktionsheizleitungselemente, welche sich in zumindest einem Heizleitungsparameter unterscheiden, zu einer Bildung zumindest einer Induktionsheizleitung miteinander verdrillt werden.

Die Induktionsgargerätevorrichtung soll hierbei nicht auf die oben beschriebene Anwendung und Ausführungsform beschränkt sein. Insbesondere kann die Induktionsgargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionsgargerät mit einer Induktionsgargerätevorrichtung in einer schematischen Draufsicht,
- Fig. 2: eine Induktionsheizeinheit der Induktionsgargerätevorrichtung in einer schematischen Draufsicht,
- Fig. 3: einen Längenabschnitt einer Induktionsheizleitung der Induktionsheizeinheit in einer schematischen Darstellung,
- Fig. 4: einen Querschnitt durch die Induktionsheizleitung aus Figur 3 in einer schematischen Schnittdarstellung,
- Fig. 5: einen Querschnitt einer Induktionsheizleitung einer Induktionsheizeinheit einer alternativen Induktionsgargerätevorrichtung in einer schematischen Schnittdarstellung,
- Fig. 6: einen Querschnitt einer Induktionsheizleitung einer Induktionsheizeinheit einer alternativen Induktionsgargerätevorrichtung in einer schematischen Schnittdarstellung,
- Fig. 7: einen Querschnitt einer Induktionsheizleitung einer Induktionsheizeinheit einer alternativen Induktionsgargerätevorrichtung in einer schematischen Schnittdarstellung,
- Fig. 8: einen Querschnitt einer Induktionsheizleitung einer Induktionsheizeinheit einer alternativen Induktionsgargerätevorrichtung in einer schematischen Schnittdarstellung,
- Fig. 9: einen Querschnitt einer Induktionsheizleitung einer Induktionsheizeinheit einer alternativen Induktionsgargerätevorrichtung in einer schematischen Schnittdarstellung,
- Fig. 10: einen Querschnitt mehrerer Induktionsheizleitungen einer Induktionsheizeinheit einer alternativen Induktionsgargerätevorrichtung in einer schematischen Schnittdarstellung,
- Fig. 11: einen Querschnitt mehrerer Induktionsheizleitungen einer Induktionsheizeinheit einer alternativen Induktionsgargerätevorrichtung in einer schematischen Schnittdarstellung,
- Fig. 12: ein Diagramm, in welchem ein Widerstand über einer Frequenz aufgetragen ist, in einer schematischen Darstellung,
- Fig. 13: ein Diagramm, in welchem ein Widerstand über einer Frequenz aufgetragen ist, in einer schematischen Darstellung,
- Fig. 14: ein Diagramm, in welchem ein Widerstand über einer Frequenz aufgetragen ist, in einer schematischen Darstellung,
- Fig. 15: ein Diagramm, in welchem ein Widerstand über einer Frequenz aufgetragen ist, in einer schematischen Darstellung,
- Fig. 16: ein Diagramm, in welchem ein Widerstand über einer Frequenz aufgetragen ist, in einer schematischen Darstellung,
- Fig. 17: ein Diagramm, in welchem ein Widerstand über einer Frequenz aufgetragen ist, in einer schematischen Darstellung,
- Fig. 18: ein Diagramm, in welchem ein Widerstand über einer Frequenz aufgetragen ist, in einer schematischen Darstellung,
- Fig. 19: ein Diagramm, in welchem ein Widerstand über einer Frequenz aufgetragen ist, in einer schematischen Darstellung,
- Fig. 20: ein Diagramm, in welchem ein Widerstand über einer Frequenz aufgetragen ist, in einer schematischen Darstellung,
- Fig. 21: ein Diagramm, in welchem ein Widerstand über einer Frequenz aufgetragen ist, in einer schematischen Darstellung,
- Fig. 22: ein Diagramm, in welchem ein Widerstand über einer Frequenz aufgetragen ist, in einer schematischen Darstellung,
- Fig. 23: ein Diagramm, in welchem ein Widerstand über einer Frequenz aufgetragen ist, in einer schematischen Darstellung,
- Fig. 24: ein Diagramm, in welchem eine Effizienz über einem Anteil an Induktionsheizleitungselementen aufgetragen ist, die zu einem Großteil aus Kupfer bestehen, in einer schematischen Darstellung und
- Fig. 25: ein Diagramm, in welchem Kosten über einem Anteil an Induktionsheizleitungselementen aufgetragen sind, die zu einem Großteil aus Kupfer bestehen, in einer schematischen Darstellung.

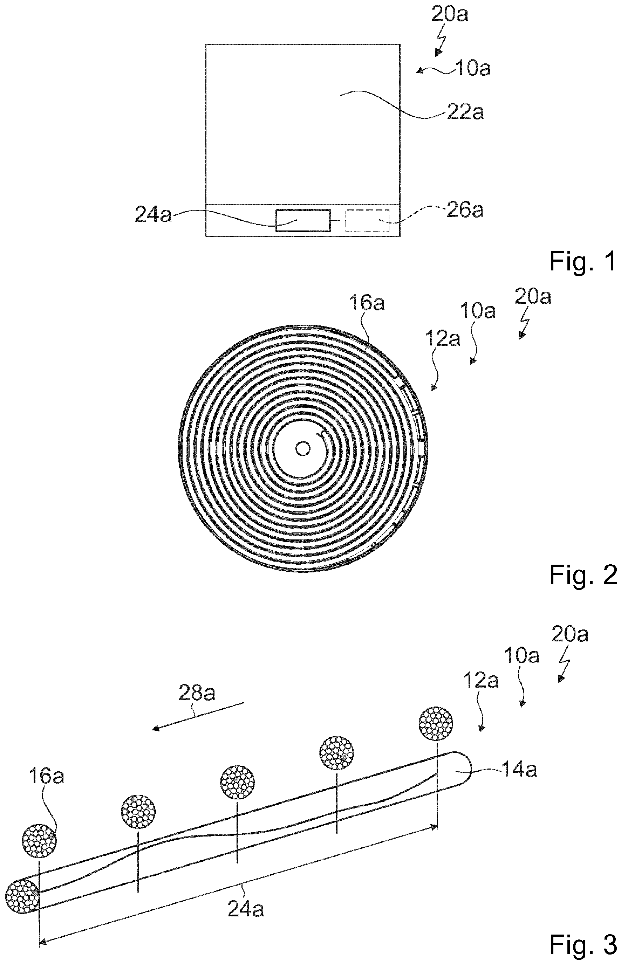

Figur 1 zeigt ein Induktionsgargerät 20a. Beispielsweise könnte das Induktionsgargerät 20a als ein Induktionsofen, wie beispielsweise als ein Induktionsbackofen und/oder als ein Induktionsherd, und/oder als ein Induktionsgrillgerät ausgebildet sein. Im vorliegenden Ausführungsbeispiel ist das Induktionsgargerät 20a als ein Induktionskochfeld ausgebildet.

Das Induktionsgargerät 20a weist eine Induktionsgargerätevorrichtung 10a auf. Die Induktionsgargerätevorrichtung 10a ist als eine Induktionskochfeldvorrichtung ausgebildet.

Die Induktionsgargerätevorrichtung 10a weist eine Gerätegrundplatte 22a auf. In einem montierten Zustand bildet die Gerätegrundplatte 22a eine Sichtfläche aus, welche in einem montierten Zustand insbesondere einem Bediener zugewandt angeordnet ist. Im vorliegenden Ausführungsbeispiel ist die Gerätegrundplatte 22a als eine Aufstellplatte, und zwar insbesondere als eine Kochfeldplatte, ausgebildet. In einem montierten Zustand bildet die Gerätegrundplatte 22a einen Teil eines Geräteaußengehäuses aus, und zwar insbesondere eines Geräteaußengehäuses insbesondere des Induktionsgargeräts 20a. Die Gerätegrundplatte 22a ist zu einem Aufstellen von Gargeschirr vorgesehen (nicht dargestellt).

Die Induktionsgargerätevorrichtung 10a weist eine Bedienerschnittstelle 24a zu einer Eingabe und/oder Auswahl von Betriebsparametern auf (vgl. Figur 1), beispielsweise einer Heizleistung und/oder einer Heizleistungsdichte und/oder einer Heizzone. Die Bedienerschnittstelle 24a ist zu einer Ausgabe eines Werts eines Betriebsparameters an einen Bediener vorgesehen.

Die Induktionsgargerätevorrichtung 10a weist eine Steuereinheit 26a auf. In einem Betriebszustand steuert und/oder regelt die Steuereinheit 26a eine Kochfeldhauptfunktion. Die Steuereinheit 26a ist dazu vorgesehen, in Abhängigkeit von mittels der Bedienerschnittstelle 24a eingegebener Betriebsparameter, Aktionen auszuführen und/oder Einstellungen zu verändern. Die Steuereinheit 26a regelt in einem Betriebszustand eine Energiezufuhr zu zumindest einer Induktionsheizeinheit 12a.

Die Induktionsgargerätevorrichtung 10a weist zumindest eine Induktionsheizeinheit 12a auf (vgl. Figur 2). Im vorliegenden Ausführungsbeispiel weist die Induktionsgargerätevorrichtung 10a eine Vielzahl an Induktionsheizeinheiten 12a auf. Alternativ könnte die Induktionsgargerätevorrichtung 10a beispielsweise eine kleinere Anzahl an Induktionsheizeinheiten 12a aufweisen, wie beispielsweise genau eine Induktionsheizeinheit 12a und/oder zumindest zwei, insbesondere zumindest vier, vorteilhaft zumindest acht, besonders vorteilhaft zumindest zwölf und vorzugsweise mehrere Induktionsheizeinheiten 12a. Die Induktionsheizeinheiten 12a könnten beispielsweise in Form einer Matrix angeordnet sein. Im Folgenden wird lediglich eine der Induktionsheizeinheiten 12a beschrieben.

Die Induktionsheizeinheit 12a ist in einer Einbaulage unterhalb der Gerätegrundplatte 22a angeordnet. Die Induktionsheizeinheit 12a ist dazu vorgesehen, zumindest ein auf der Gerätegrundplatte 22a oberhalb der Induktionsheizeinheit 12a aufgestelltes Gargeschirr zu erhitzen.

Die Induktionsheizeinheit 12a weist eine Induktionsheizleitung 14a auf (vgl. Figuren 2 bis 4). In einem Betriebszustand stellt die Induktionsheizeinheit 12a mittels der Induktionsheizleitung 14a Energie zu einer Beheizung von Gargeschirr bereit.

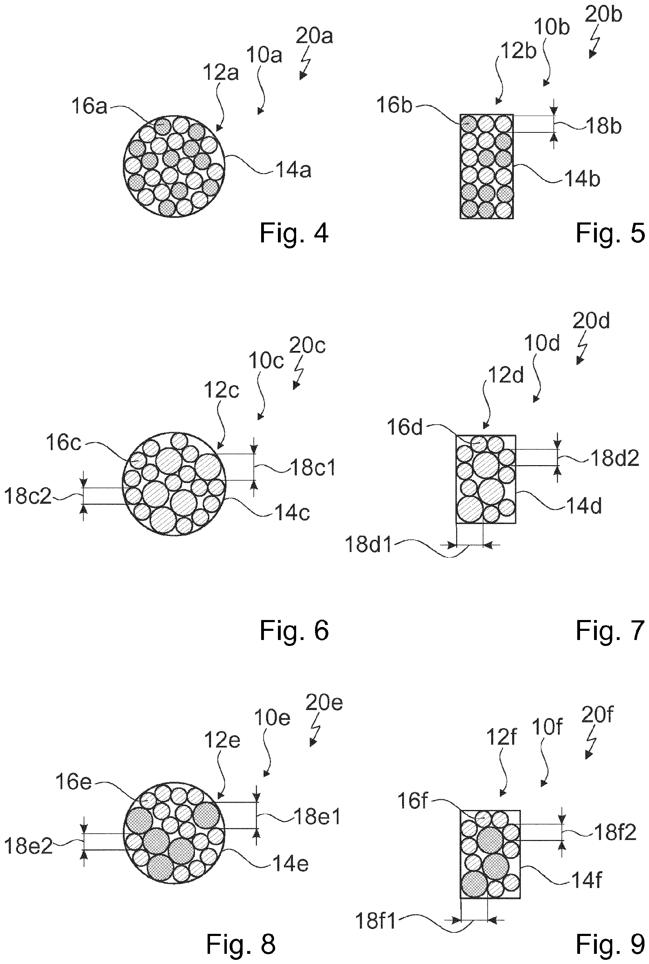

Die Induktionsheizeinheit 12a weist eine Vielzahl an Induktionsheizleitungselementen 16a auf (vgl. Figuren 3 und 4). Von mehrfach vorhandenen Objekten ist in den Figuren jeweils lediglich eines mit einem Bezugszeichen versehen. Die Induktionsheizleitungselemente 16a sind Teil einer gemeinsamen Induktionsheizleitung 14a.

Die Induktionsheizleitung 14a weist eine Vielzahl an Induktionsheizleitungselementen 16a auf. Die Induktionsheizleitungselemente 16a erstrecken sich über im Wesentlichen eine gesamte Längserstreckung der Induktionsheizleitung 14a.

In einem Betriebszustand sind die Induktionsheizleitungselemente 16a abschnittsweise miteinander verdrillt. Im vorliegenden Ausführungsbeispiel sind die Induktionsheizleitungselemente 16a über im Wesentlichen eine gesamte Längserstreckung der Induktionsheizleitung 14a miteinander verdrillt. Die Induktionsheizleitungselemente 16a sind azimutal und radial gewickelt.

Zumindest zwei der Induktionsheizleitungselemente 16a unterscheiden sich wenigstens abschnittsweise und vorteilhaft über wenigstens im Wesentlichen eine gesamte Längserstreckung der Induktionsheizleitung 14a in zumindest einem Heizleitungsparameter. Im vorliegenden Ausführungsbeispiel unterscheiden sich zumindest zwei der Induktionsheizleitungselemente 16a wenigstens abschnittsweise und vorteilhaft über wenigstens im Wesentlichen eine gesamte Längserstreckung der Induktionsheizleitung 14a in genau einem Heizleitungsparameter.

Im Wesentlichen 50 % der Induktionsheizleitungselemente 16a unterscheiden sich wenigstens abschnittsweise und vorteilhaft über wenigstens im Wesentlichen eine gesamte Längserstreckung der Induktionsheizleitung 14a in dem Heizleitungsparameter insbesondere von restlichen Induktionsheizleitungselementen 16a. Jeweils im Wesentlichen 50 % der Induktionsheizleitungselemente 16a weisen wenigstens abschnittsweise und vorteilhaft über wenigstens im Wesentlichen eine gesamte Längserstreckung der Induktionsheizleitung 14a gleiche Heizleitungsparameter auf und sind insbesondere identisch ausgebildet.

Zumindest zwei der Induktionsheizleitungselemente 16a unterscheiden sich wenigstens abschnittsweise und vorteilhaft über wenigstens im Wesentlichen eine gesamte Längserstreckung der Induktionsheizleitung 14a in einem Material (vgl. Figur 4). Der Heizleitungsparameter ist im vorliegenden Ausführungsbeispiel ein Material.

Im Wesentlichen 50 % der Induktionsheizleitungselemente 16a unterscheiden sich wenigstens abschnittsweise und vorteilhaft über wenigstens im Wesentlichen eine gesamte Längserstreckung der Induktionsheizleitung 14a in einem Material insbesondere von restlichen Induktionsheizleitungselementen 16a. Jeweils im Wesentlichen 50 % der Induktionsheizleitungselemente 16a bestehen wenigstens abschnittsweise und vorteilhaft über wenigstens im Wesentlichen eine gesamte Längserstreckung der Induktionsheizleitung 14a wenigstens zu einem Großteil aus dem gleichen Material und sind insbesondere identisch ausgebildet.

Im Wesentlichen 50 % der Induktionsheizleitungselemente 16a bestehen wenigstens abschnittsweise und vorteilhaft über wenigstens im Wesentlichen eine gesamte Längserstreckung der Induktionsheizleitung 14a wenigstens zu einem Großteil aus Kupfer. Im Wesentlichen 50 % der Induktionsheizleitungselemente 16a bestehen wenigstens abschnittsweise und vorteilhaft über wenigstens im Wesentlichen eine gesamte Längserstreckung der Induktionsheizleitung 14a wenigstens zu einem Großteil aus Aluminium.

In den Figuren sind Induktionsheizleitungselemente 16a, welche wenigstens zu einem Großteil aus Kupfer bestehen, mit einer linierten Schraffur dargestellt. In den Figuren sind Induktionsheizleitungselemente 16a, welche wenigstens zu einem Großteil aus Aluminium bestehen, mit einer karierten Schraffur dargestellt.

Die Induktionsheizleitungselemente 16a weisen im vorliegenden Ausführungsbeispiel wenigstens abschnittsweise und vorteilhaft über wenigstens im Wesentlichen eine gesamte Längserstreckung der Induktionsheizleitung 14a eine im Wesentlichen und vorteilhaft vollständig identische maximale Quererstreckung 18a auf. Im vorliegenden Ausführungsbeispiel weisen die Induktionsheizleitungselemente 16a wenigstens abschnittsweise und vorteilhaft über wenigstens im Wesentlichen eine gesamte Längserstreckung der Induktionsheizleitung 14a eine maximale Quererstreckung 18a von im Wesentlichen 0,2 mm auf.

Im vorliegenden Ausführungsbeispiel weist die Induktionsheizleitung 14a in zumindest einer Querschnittsebene, welche senkrecht zu einer Längsrichtung 28a der Induktionsheizleitung 14a ausgerichtet ist, eine kreisartige Gestalt auf. Die Induktionsheizleitung 14a weist über im Wesentlichen eine gesamte Längserstreckung der Induktionsheizleitung 14a in jeder Querschnittsebene, welche senkrecht zu einer Längsrichtung 28a der Induktionsheizleitung 14a ausgerichtet ist, eine kreisartige Gestalt auf.

In einem Verfahren zu einer Montage der Induktionsgargerätevorrichtung 10a werden die Induktionsheizleitungselemente 16a, welche sich in zumindest einem Heizleitungsparameter unterscheiden, zu einer Bildung der Induktionsheizleitung 14a miteinander verdrillt. Die Induktionsheizleitungselemente 16a werden zu der Bildung der Induktionsheizleitung 14a azimutal und radial gewickelt.

In Figuren 5 bis 25 sind sieben weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b bis h in den Bezugszeichen des Ausführungsbeispiels der Figuren 5 bis 25 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Figur 5 zeigt einen Querschnitt einer Induktionsheizleitung 14b einer Induktionsheizeinheit 12b einer alternativen Induktionsgargerätevorrichtung 10b eines alternativen Induktionsgargeräts 20b. Die in Figur 5 dargestellte Induktionsheizleitung 14b unterscheidet sich von einer zu den Figuren 1 bis 4 beschriebenen Induktionsheizleitung 14a durch eine Formgebung. Die in Figur 5 dargestellte Induktionsheizleitung 14b weist in zumindest einer Querschnittsebene, welche senkrecht zu einer Längsrichtung 28b der Induktionsheizleitung 14b ausgerichtet ist, eine rechteckartige Gestalt auf. Die Induktionsheizleitung 14b weist über im Wesentlichen eine gesamte Längserstreckung der Induktionsheizleitung 14b in jeder Querschnittsebene, welche senkrecht zu einer Längsrichtung 28b der Induktionsheizleitung 14b ausgerichtet ist, eine rechteckartige Gestalt auf.

Figur 6 zeigt einen Querschnitt einer Induktionsheizleitung 14c einer Induktionsheizeinheit 12c einer alternativen Induktionsgargerätevorrichtung 10c eines alternativen Induktionsgargeräts 20c. Die Induktionsheizeinheit 12c weist eine Vielzahl an Induktionsheizleitungselementen 16c auf, die Teil einer gemeinsamen Induktionsheizleitung 14c sind. Zumindest zwei der Induktionsheizleitungselemente 16c unterscheiden sich wenigstens abschnittsweise und vorteilhaft über wenigstens im Wesentlichen eine gesamte Längserstreckung der Induktionsheizleitung 14c in zumindest einem Heizleitungsparameter. Im vorliegenden Ausführungsbeispiel unterscheiden sich zumindest zwei der Induktionsheizleitungselemente 16c wenigstens abschnittsweise und vorteilhaft über wenigstens im Wesentlichen eine gesamte Längserstreckung der Induktionsheizleitung 14c in genau einem Heizleitungsparameter.

Zumindest zwei der Induktionsheizleitungselemente 16c unterscheiden sich wenigstens abschnittsweise und vorteilhaft über wenigstens im Wesentlichen eine gesamte Längserstreckung der Induktionsheizleitung 14c in einer maximalen Quererstreckung 18c. Der Heizleitungsparameter ist im vorliegenden Ausführungsbeispiel eine maximale Quererstreckung 18c.

Im Wesentlichen ein Drittel der Induktionsheizleitungselemente 16c weist wenigstens abschnittsweise und vorteilhaft über wenigstens im Wesentlichen eine gesamte Längserstreckung der Induktionsheizleitung 14c eine im Wesentlichen identische maximale Quererstreckung 18c1 auf. Im Wesentlichen ein Drittel der Induktionsheizleitungselemente 16c weist wenigstens abschnittsweise und vorteilhaft über wenigstens im Wesentlichen eine gesamte Längserstreckung der Induktionsheizleitung 14c eine maximale Quererstreckung 18c1 von im Wesentlichen 0,3 mm auf.

Im Wesentlichen zwei Drittel der Induktionsheizleitungselemente 16c weisen wenigstens abschnittsweise und vorteilhaft über wenigstens im Wesentlichen eine gesamte Längserstreckung der Induktionsheizleitung 14c eine im Wesentlichen identische maximale Quererstreckung 18c2 auf. Im Wesentlichen zwei Drittel der Induktionsheizleitungselemente 16c weisen wenigstens abschnittsweise und vorteilhaft über wenigstens im Wesentlichen eine gesamte Längserstreckung der Induktionsheizleitung 14c eine maximale Quererstreckung 18c2 von im Wesentlichen 0,2 mm auf.

Die Induktionsheizleitungselemente 16c bestehen im vorliegenden Ausführungsbeispiel wenigstens abschnittsweise und vorteilhaft über wenigstens im Wesentlichen eine gesamte Längserstreckung der Induktionsheizleitung 14c wenigstens zu einem Großteil aus dem gleichen Material. Im vorliegenden Ausführungsbeispiel bestehen die Induktionsheizleitungselemente 16c wenigstens abschnittsweise und vorteilhaft über wenigstens im Wesentlichen eine gesamte Längserstreckung der Induktionsheizleitung 14c wenigstens zu einem Großteil aus Kupfer.

In einem alternativen, nicht dargestellten Ausführungsbeispiel könnten die Induktionsheizleitungselemente 16c wenigstens abschnittsweise und vorteilhaft über wenigstens im Wesentlichen eine gesamte Längserstreckung der Induktionsheizleitung 14c wenigstens zu einem Großteil aus Aluminium bestehen.

Im vorliegenden Ausführungsbeispiel weist die Induktionsheizleitung 14c in zumindest einer Querschnittsebene, welche senkrecht zu einer Längsrichtung 28c der Induktionsheizleitung 14c ausgerichtet ist, eine kreisartige Gestalt auf.

Figur 7 zeigt einen Querschnitt einer Induktionsheizleitung 14d einer Induktionsheizeinheit 12d einer alternativen Induktionsgargerätevorrichtung 10d eines alternativen Induktionsgargeräts 20d. Die in Figur 7 dargestellte Induktionsheizleitung 14d unterscheidet sich von einer zu der Figur 6 beschriebenen Induktionsheizleitung 14c durch eine Formgebung. Die in Figur 7 dargestellte Induktionsheizleitung 14d weist in zumindest einer Querschnittsebene, welche senkrecht zu einer Längsrichtung 28d der Induktionsheizleitung 14d ausgerichtet ist, eine rechteckartige Gestalt auf.

Figur 8 zeigt einen Querschnitt einer Induktionsheizleitung 14e einer Induktionsheizeinheit 12e einer alternativen Induktionsgargerätevorrichtung 10e eines alternativen Induktionsgargeräts 20e. Die Induktionsheizeinheit 12e weist eine Vielzahl an Induktionsheizleitungselementen 16e auf, die Teil einer gemeinsamen Induktionsheizleitung 14e sind. Zumindest zwei der Induktionsheizleitungselemente 16e unterscheiden sich wenigstens abschnittsweise und vorteilhaft über wenigstens im Wesentlichen eine gesamte Längserstreckung der Induktionsheizleitung 14e in zumindest einem Heizleitungsparameter. Im vorliegenden Ausführungsbeispiel unterscheiden sich zumindest zwei der Induktionsheizleitungselemente 16e wenigstens abschnittsweise und vorteilhaft über wenigstens im Wesentlichen eine gesamte Längserstreckung der Induktionsheizleitung 14e in zwei Heizleitungsparametern.

Zumindest zwei der Induktionsheizleitungselemente 16e unterscheiden sich wenigstens abschnittsweise und vorteilhaft über wenigstens im Wesentlichen eine gesamte Längserstreckung der Induktionsheizleitung 14e in einer maximalen Quererstreckung 18e. Einer der Heizleitungsparameter ist im vorliegenden Ausführungsbeispiel eine maximale Quererstreckung 18e.

Im Wesentlichen ein Drittel der Induktionsheizleitungselemente 16e weisen wenigstens abschnittsweise und vorteilhaft über wenigstens im Wesentlichen eine gesamte Längserstreckung der Induktionsheizleitung 14e eine im Wesentlichen identische maximale Quererstreckung 18e1 auf. Im Wesentlichen ein Drittel der Induktionsheizleitungselemente 16e weist wenigstens abschnittsweise und vorteilhaft über wenigstens im Wesentlichen eine gesamte Längserstreckung der Induktionsheizleitung 14e eine maximale Quererstreckung 18e1 von im Wesentlichen 0,3 mm auf.

Im Wesentlichen zwei Drittel der Induktionsheizleitungselemente 16e weisen wenigstens abschnittsweise und vorteilhaft über wenigstens im Wesentlichen eine gesamte Längserstreckung der Induktionsheizleitung 14e eine im Wesentlichen identische maximale Quererstreckung 18e2 auf. Im Wesentlichen zwei Drittel der Induktionsheizleitungselemente 16e weisen wenigstens abschnittsweise und vorteilhaft über wenigstens im Wesentlichen eine gesamte Längserstreckung der Induktionsheizleitung 14e eine maximale Quererstreckung 18e2 von im Wesentlichen 0,2 mm auf.

Zumindest zwei der Induktionsheizleitungselemente 16e unterscheiden sich wenigstens abschnittsweise und vorteilhaft über wenigstens im Wesentlichen eine gesamte Längserstreckung der Induktionsheizleitung 14e in einem Material. Einer der Heizleitungsparameter ist im vorliegenden Ausführungsbeispiel ein Material.

Im Wesentlichen ein Drittel der Induktionsheizleitungselemente 16e besteht wenigstens abschnittsweise und vorteilhaft über wenigstens im Wesentlichen eine gesamte Längserstreckung der Induktionsheizleitung 14e wenigstens zu einem Großteil aus dem gleichen Material. Im Wesentlichen ein Drittel der Induktionsheizleitungselemente 16e besteht wenigstens abschnittsweise und vorteilhaft über wenigstens im Wesentlichen eine gesamte Längserstreckung der Induktionsheizleitung 14e wenigstens zu einem Großteil aus Aluminium. Diejenigen Induktionsheizleitungselemente 16e, welche wenigstens abschnittsweise und vorteilhaft über wenigstens im Wesentlichen eine gesamte Längserstreckung der Induktionsheizleitung 14e eine größere maximale Quererstreckung 18e1, insbesondere von im Wesentlichen 0,3 mm, aufweisen, bestehen wenigstens abschnittsweise und vorteilhaft über wenigstens im Wesentlichen eine gesamte Längserstreckung der Induktionsheizleitung 14e wenigstens zu einem Großteil aus Aluminium.

Im Wesentlichen zwei Drittel der Induktionsheizleitungselemente 16e besteht wenigstens abschnittsweise und vorteilhaft über wenigstens im Wesentlichen eine gesamte Längserstreckung der Induktionsheizleitung 14e wenigstens zu einem Großteil aus dem gleichen Material. Im Wesentlichen zwei Drittel der Induktionsheizleitungselemente 16e besteht wenigstens abschnittsweise und vorteilhaft über wenigstens im Wesentlichen eine gesamte Längserstreckung der Induktionsheizleitung 14e wenigstens zu einem Großteil aus Kupfer. Diejenigen Induktionsheizleitungselemente 16e, welche wenigstens abschnittsweise und vorteilhaft über wenigstens im Wesentlichen eine gesamte Längserstreckung der Induktionsheizleitung 14e eine kleinere maximale Quererstreckung 18e2, insbesondere von im Wesentlichen 0,2 mm, aufweisen, bestehen wenigstens abschnittsweise und vorteilhaft über wenigstens im Wesentlichen eine gesamte Längserstreckung der Induktionsheizleitung 14e wenigstens zu einem Großteil aus Kupfer.

In einem alternativen, nicht dargestellten Ausführungsbeispiel könnten diejenigen Induktionsheizleitungselemente 16e, welche wenigstens abschnittsweise und vorteilhaft über wenigstens im Wesentlichen eine gesamte Längserstreckung der Induktionsheizleitung 14e eine größere maximale Quererstreckung 18e1, insbesondere von im Wesentlichen 0,3 mm, aufweisen, wenigstens abschnittsweise und vorteilhaft über wenigstens im Wesentlichen eine gesamte Längserstreckung der Induktionsheizleitung 14e wenigstens zu einem Großteil aus Kupfer bestehen. Insbesondere könnten diejenigen Induktionsheizleitungselemente 16e, welche wenigstens abschnittsweise und vorteilhaft über wenigstens im Wesentlichen eine gesamte Längserstreckung der Induktionsheizleitung 14e eine kleinere maximale Quererstreckung 18e2, insbesondere von im Wesentlichen 0,2 mm, aufweisen, wenigstens abschnittsweise und vorteilhaft über wenigstens im Wesentlichen eine gesamte Längserstreckung der Induktionsheizleitung 14e wenigstens zu einem Großteil aus Aluminium bestehen.

Im vorliegenden Ausführungsbeispiel weist die Induktionsheizleitung 14e in zumindest einer Querschnittsebene, welche senkrecht zu einer Längsrichtung 28e der Induktionsheizleitung 14e ausgerichtet ist, eine kreisartige Gestalt auf.

Figur 9 zeigt einen Querschnitt einer Induktionsheizleitung 14f einer Induktionsheizeinheit 12f einer alternativen Induktionsgargerätevorrichtung 10f eines alternativen Induktionsgargeräts 20f. Die in Figur 9 dargestellte Induktionsheizleitung 14f unterscheidet sich von einer zu der Figur 8 beschriebenen Induktionsheizleitung 14e durch eine Formgebung. Die in Figur 9 dargestellte Induktionsheizleitung 14f weist in zumindest einer Querschnittsebene, welche senkrecht zu einer Längsrichtung 28f der Induktionsheizleitung 14f ausgerichtet ist, eine rechteckartige Gestalt auf.

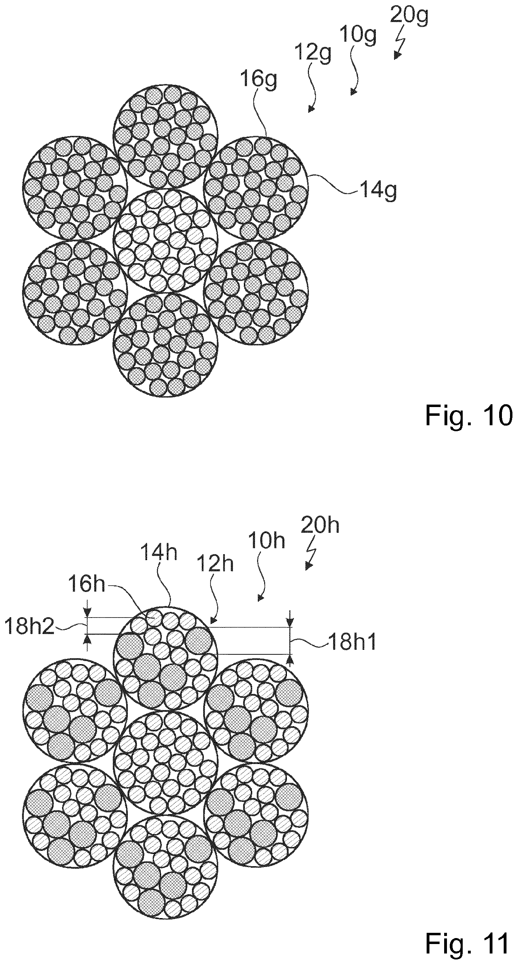

Figur 10 zeigt einen Querschnitt von sieben Induktionsheizleitungen 14g einer Induktionsheizeinheit 12g einer alternativen Induktionsgargerätevorrichtung 10g eines alternativen Induktionsgargeräts 20g. Die Induktionsheizeinheit 12g weist eine Vielzahl an Induktionsheizleitungselementen 16g auf. Jeweils ein Teil der Induktionsheizleitungselemente 16g sind Teil einer der Induktionsheizleitungen 14g. Jede der Induktionsheizleitungen 14g weist eine Vielzahl an Induktionsheizleitungselementen 16g auf. Induktionsheizleitungselemente 16g, welche sich in zumindest einem Heizleitungsparameter unterscheiden, sind Teil verschiedener Induktionsheizleitungen 14g.

Die Induktionsheizleitungselemente 16g einer jeden Induktionsheizleitung 14g weisen im vorliegenden Ausführungsbeispiel wenigstens abschnittsweise und vorteilhaft über wenigstens im Wesentlichen eine gesamte Längserstreckung der Induktionsheizleitung 14g eine im Wesentlichen und vorteilhaft vollständig identische maximale Quererstreckung 18g auf. Im vorliegenden Ausführungsbeispiel weisen die Induktionsheizleitungselemente 16g einer jeden Induktionsheizleitung 14g wenigstens abschnittsweise und vorteilhaft über wenigstens im Wesentlichen eine gesamte Längserstreckung der Induktionsheizleitung 14g eine maximale Quererstreckung 18g von im Wesentlichen 0,2 mm auf.

Die Induktionsheizleitungselemente 16g von einer der Induktionsheizleitungen 14g bestehen im vorliegenden Ausführungsbeispiel wenigstens abschnittsweise und vorteilhaft über wenigstens im Wesentlichen eine gesamte Längserstreckung der Induktionsheizleitung 14g wenigstens zu einem Großteil aus Kupfer. Die Induktionsheizleitungselemente 16g von sechs der Induktionsheizleitungen 14g bestehen im vorliegenden Ausführungsbeispiel wenigstens abschnittsweise und vorteilhaft über wenigstens im Wesentlichen eine gesamte Längserstreckung der Induktionsheizleitung 14g wenigstens zu einem Großteil aus Aluminium.

Figur 11 zeigt einen Querschnitt von sieben Induktionsheizleitungen 14h einer Induktionsheizeinheit 12h einer alternativen Induktionsgargerätevorrichtung 10h eines alternativen Induktionsgargeräts 20h. Die Induktionsheizeinheit 12h weist eine Vielzahl an Induktionsheizleitungselementen 16h auf. Jeweils ein Teil der Induktionsheizleitungselemente 16h sind Teil einer der Induktionsheizleitungen 14h. Jede der Induktionsheizleitungen 14h weist eine Vielzahl an Induktionsheizleitungselementen 16h auf. Eine der Induktionsheizleitungen 14h ist wie die eine zu der Figur 10 beschriebene der Induktionsheizleitungen 14g ausgebildet, weshalb an dieser Stelle auf die zu Figur 10 für die eine der Induktionsheizleitungen 14g angeführte Beschreibung verwiesen wird. Sechs der Induktionsheizleitungen 14h sind wie eine zu der Figur 8 beschriebene Induktionsheizleitung 14e ausgebildet, weshalb an dieser Stelle auf die zu Figur 8 angeführte Beschreibung verwiesen wird.

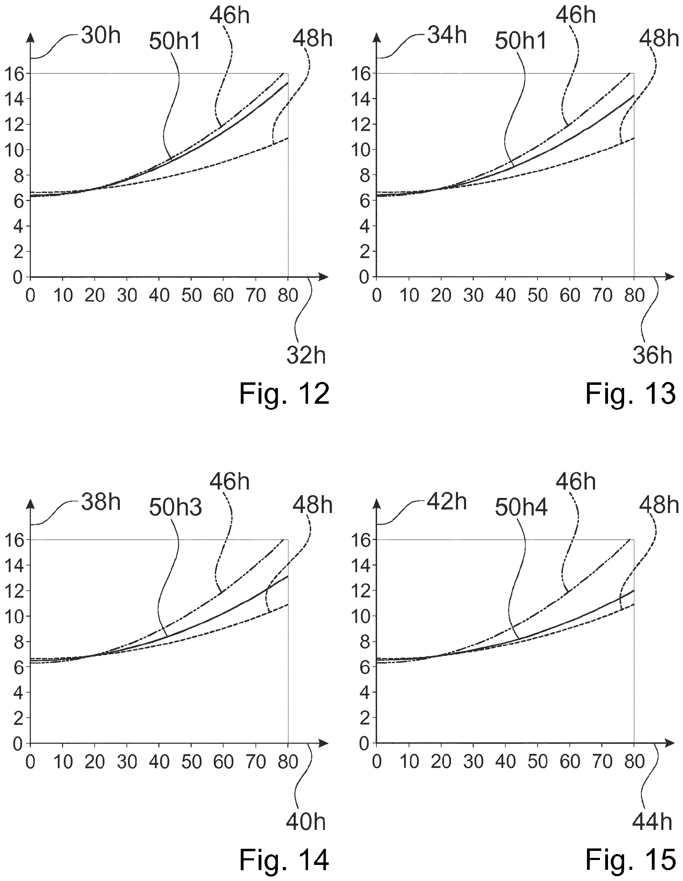

Im Folgenden soll anhand der Figuren 12 bis 25 dargelegt werden, wie durch geeignete Wahl und/oder Anpassung des Heizleitungsparameters Eigenschaften der Induktionsheizeinheit 12h und/oder der Induktionsheizleitung 14h und/oder der Induktionsheizleitungselemente 16h eingestellt und/oder angepasst und/oder optimiert werden können. Hierzu sind in den Figuren 12 bis 25 mehrere Beispielfälle dargestellt. Innerhalb eines jeden Beispielfalls wird angenommen, dass eine Packungsdichte einzelner Induktionsheizleitungen 14h konstant ist, und zwar insbesondere unabhängig von Heizleitungsparametern der Induktionsheizleitungselementen 16h der Induktionsheizleitung 14h.

Die Figuren 12 bis 15 zeigen einen Beispielfall, bei welchem eine Packungsdichte von im Wesentlichen 0,478 angenommen wird. Bei dieser Packungsdichte beträgt ein Anteil von elektrisch leitfähigem Material im Wesentlichen 47,8 % einer Querschnittsfläche der Induktionsheizleitung 14h und ein verbleibender Anteil, wie beispielsweise Luft und/oder Isolationsmaterial, im Wesentlichen 52,18 % der Querschnittsfläche der Induktionsheizleitung 14h. Auf einer Ordinatenachse 30h, 34h, 38h, 42h ist jeweils ein Widerstand in der Einheit mΩ aufgetragen. Auf einer Abszissenachse 32h, 36h, 40h, 44h ist jeweils eine Frequenz in der Einheit kHz aufgetragen.

Eine strichpunktiert dargestellte große Verlaufskurve 46h repräsentiert jeweils eine Induktionsheizleitung 14h mit Induktionsheizleitungselementen 16h, insbesondere mit einer Anzahl an 50 Induktionsheizleitungselementen 16h, die eine große maximale Quererstreckung von mindestens 0,26 mm, und insbesondere von im Wesentlichen 0,3 mm, aufweisen. Eine gestrichelt dargestellte kleine Verlaufskurve 48h repräsentiert jeweils eine Induktionsheizleitung 14h mit Induktionsheizleitungselementen 16h, insbesondere mit einer Anzahl an 107 Induktionsheizleitungselementen 16h, die eine kleine maximale Quererstreckung von maximal 0,25 mm, und insbesondere von im Wesentlichen 0,2 mm, aufweisen.

Eine in Figur 12 durchgezogen dargestellte gemischte Verlaufskurve 50h1 repräsentiert eine Induktionsheizleitung 14h mit Induktionsheizleitungselementen 16h, insbesondere mit einer Anzahl an 21 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 40 Induktionsheizleitungselementen 16h, die eine maximale Quererstreckung von mindestens 0,26 mm, und insbesondere von im Wesentlichen 0,3 mm, aufweisen. Eine in Figur 13 durchgezogen dargestellte gemischte Verlaufskurve 50h2 repräsentiert eine Induktionsheizleitung 14h mit Induktionsheizleitungselementen 16h, insbesondere mit einer Anzahl an 43 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 30 Induktionsheizleitungselementen 16h, die eine maximale Quererstreckung von mindestens 0,26 mm, und insbesondere von im Wesentlichen 0,3 mm, aufweisen. Eine in Figur 14 durchgezogen dargestellte gemischte Verlaufskurve 50h3 repräsentiert eine Induktionsheizleitung 14h mit Induktionsheizleitungselementen 16h, insbesondere mit einer Anzahl an 64 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 20 Induktionsheizleitungselementen 16h, die eine maximale Quererstreckung von mindestens 0,26 mm, und insbesondere von im Wesentlichen 0,3 mm, aufweisen. Eine in Figur 15 durchgezogen dargestellte gemischte Verlaufskurve 50h4 repräsentiert eine Induktionsheizleitung 14h mit Induktionsheizleitungselementen 16h, insbesondere mit einer Anzahl an 86 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 10 Induktionsheizleitungselementen 16h, die eine maximale Quererstreckung von mindestens 0,26 mm, und insbesondere von im Wesentlichen 0,3 mm, aufweisen.

Aus den Figuren 12 bis 15 kann entnommen werden, dass die gemischte Verlaufskurve 50h jeweils zwischen der kleinen Verlaufskurve 48h und der großen Verlaufskurve 46h angeordnet ist. Insbesondere verschiebt sich die gemischte Verlaufskurve 50h mit steigendem Anteil an Induktionsheizleitungselementen 16h mit kleiner maximaler Quererstreckung von maximal 0,25 mm und/oder mit steigendem Anteil an Induktionsheizleitungselementen 16h mit großer maximaler Quererstreckung von mindestens 0,26 mm von der kleinen Verlaufskurve 48h in Richtung zu der großen Verlaufskurve 46h.

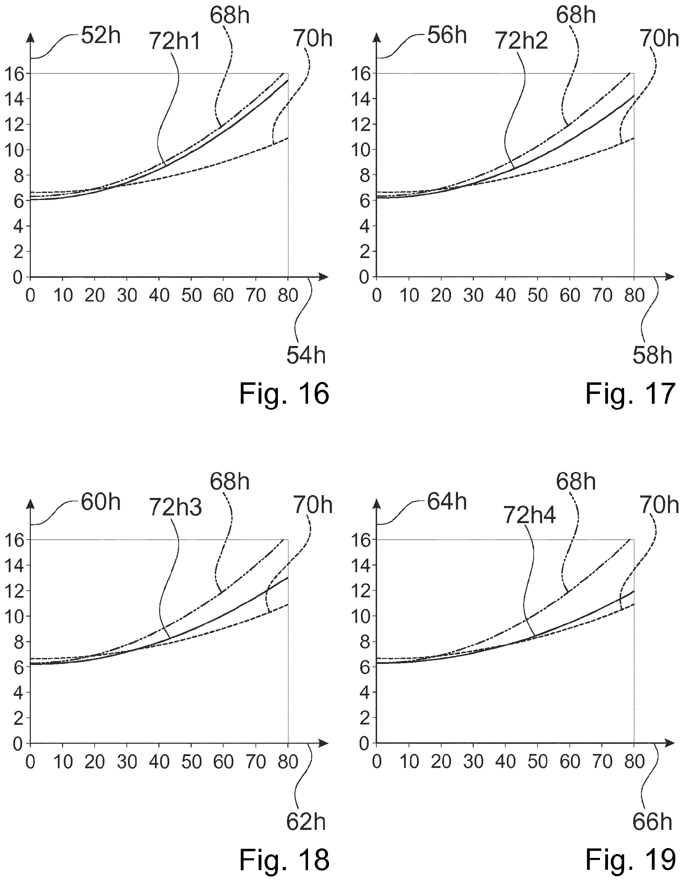

Die Figuren 16 bis 19 zeigen einen Beispielfall, bei welchem eine um 5 % bessere Packungsdichte als zu den Figuren 12 bis 15 von im Wesentlichen 0,478 angenommen wird. Auf einer Ordinatenachse 52h, 56h, 60h, 64h ist jeweils ein Widerstand in der Einheit mΩ aufgetragen. Auf einer Abszissenachse 54h, 58h, 62h, 66h ist jeweils eine Frequenz in der Einheit kHz aufgetragen.

Eine strichpunktiert dargestellte große Verlaufskurve 68h repräsentiert jeweils eine Induktionsheizleitung 14h mit Induktionsheizleitungselementen 16h, insbesondere mit einer Anzahl an 50 Induktionsheizleitungselementen 16h, die eine große maximale Quererstreckung von mindestens 0,26 mm, und insbesondere von im Wesentlichen 0,3 mm, aufweisen. Eine gestrichelt dargestellte kleine Verlaufskurve 70h repräsentiert jeweils eine Induktionsheizleitung 14h mit Induktionsheizleitungselementen 16h, insbesondere mit einer Anzahl an 107 Induktionsheizleitungselementen 16h, die eine kleine maximale Quererstreckung von maximal 0,25 mm, und insbesondere von im Wesentlichen 0,2 mm, aufweisen.

Eine in Figur 16 durchgezogen dargestellte gemischte Verlaufskurve 72h1 repräsentiert eine Induktionsheizleitung 14h mit Induktionsheizleitungselementen 16h, insbesondere mit einer Anzahl an 22 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 42 Induktionsheizleitungselementen 16h, die eine maximale Quererstreckung von mindestens 0,26 mm, und insbesondere von im Wesentlichen 0,3 mm, aufweisen. Eine in Figur 17 durchgezogen dargestellte gemischte Verlaufskurve 72h2 repräsentiert eine Induktionsheizleitung 14h mit Induktionsheizleitungselementen 16h, insbesondere mit einer Anzahl an 45 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 31 Induktionsheizleitungselementen 16h, die eine maximale Quererstreckung von mindestens 0,26 mm, und insbesondere von im Wesentlichen 0,3 mm, aufweisen. Eine in Figur 18 durchgezogen dargestellte gemischte Verlaufskurve 72h3 repräsentiert eine Induktionsheizleitung 14h mit Induktionsheizleitungselementen 16h, insbesondere mit einer Anzahl an 67 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 21 Induktionsheizleitungselementen 16h, die eine maximale Quererstreckung von mindestens 0,26 mm, und insbesondere von im Wesentlichen 0,3 mm, aufweisen. Eine in Figur 19 durchgezogen dargestellte gemischte Verlaufskurve 72h4 repräsentiert eine Induktionsheizleitung 14h mit Induktionsheizleitungselementen 16h, insbesondere mit einer Anzahl an 90 Induktionsheizleitungselementen 16h, die eine maximale Quererstreckung von maximal 0,25 mm, und insbesondere von im Wesentlichen 0,2 mm, aufweisen, und mit Induktionsheizleitungselementen 16h, insbesondere mit einer Anzahl an 10 Induktionsheizleitungselementen 16h, die eine maximale Quererstreckung von mindestens 0,26 mm, und insbesondere von im Wesentlichen 0,3 mm, aufweisen.

Aus den Figuren 16 bis 19 kann entnommen werden, dass die gemischte Verlaufskurve 72h für hohe Frequenzen jeweils zwischen der kleinen Verlaufskurve 70h und der großen Verlaufskurve 68h angeordnet ist. Insbesondere verschiebt sich die gemischte Verlaufskurve 72h mit steigendem Anteil an Induktionsheizelementen 16h mit kleiner maximaler Quererstreckung von maximal 0,25 mm und/oder mit steigendem Anteil an Induktionsheizelementen 16h mit großer maximaler Quererstreckung von mindestens 0,26 mm von der kleinen Verlaufskurve 70h in Richtung zu der großen Verlaufskurve 68h.

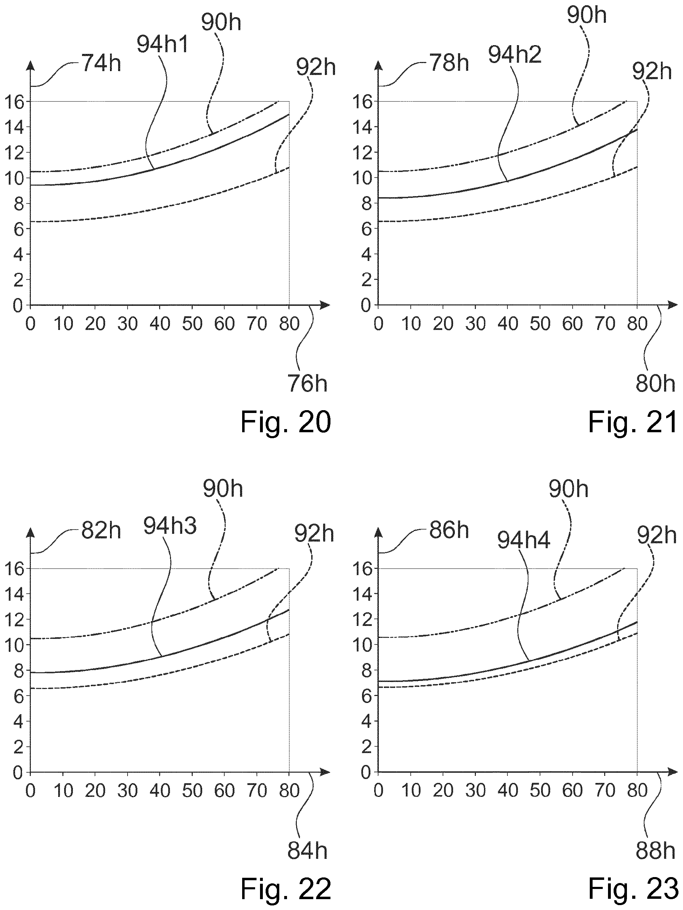

Die Figuren 20 bis 23 zeigen wie durch geeignete Wahl und/oder Anpassung eines Heizleitungsparameters, welcher ein Material ist, Eigenschaften der Induktionsheizeinheit 12h und/oder der Induktionsheizleitung 14h und/oder der Induktionsheizleitungselemente 16h eingestellt und/oder angepasst und/oder optimiert werden können. Auf einer Ordinatenachse 74h, 78h, 82h, 86h ist jeweils ein Widerstand in der Einheit mΩ aufgetragen. Auf einer Abszissenachse 76h, 80h, 84h, 88h ist jeweils eine Frequenz in der Einheit kHz aufgetragen.

Eine strichpunktiert dargestellte große Verlaufskurve 90h repräsentiert jeweils eine Induktionsheizleitung 14h mit Induktionsheizleitungselementen 16h, insbesondere mit einer Anzahl an 50 Induktionsheizleitungselementen 16h, die eine große maximale Quererstreckung von mindestens 0,26 mm, und insbesondere von im Wesentlichen 0,3 mm, aufweisen und zu einem Großteil aus Aluminium bestehen. Eine gestrichelt dargestellte kleine Verlaufskurve 92h repräsentiert jeweils eine Induktionsheizleitung 14h mit Induktionsheizleitungselementen 16h, insbesondere mit einer Anzahl an 107 Induktionsheizleitungselementen 16h, die eine kleine maximale Quererstreckung von maximal 0,25 mm, und insbesondere von im Wesentlichen 0,2 mm, aufweisen und zu einem Großteil aus Kupfer bestehen.

Eine in Figur 20 durchgezogen dargestellte gemischte Verlaufskurve 94h1 repräsentiert eine Induktionsheizleitung 14h mit Induktionsheizleitungselementen 16h, insbesondere mit einer Anzahl an 21 Induktionsheizleitungselementen 16h, die eine maximale Quererstreckung von maximal 0,25 mm, und insbesondere von im Wesentlichen 0,2 mm, aufweisen und zu einem Großteil aus Kupfer bestehen, und mit Induktionsheizleitungselementen 16h, insbesondere mit einer Anzahl an 40 Induktionsheizleitungselementen 16h, die eine maximale Quererstreckung von mindestens 0,26 mm, und insbesondere von im Wesentlichen 0,3 mm, aufweisen und zu einem Großteil aus Aluminium bestehen. Eine in Figur 21 durchgezogen dargestellte gemischte Verlaufskurve 94h2 repräsentiert eine Induktionsheizleitung 14h mit Induktionsheizleitungselementen 16h, insbesondere mit einer Anzahl an 43 Induktionsheizleitungselementen 16h, die eine maximale Quererstreckung von maximal 0,25 mm, und insbesondere von im Wesentlichen 0,2 mm, aufweisen und zu einem Großteil aus Kupfer bestehen, und mit Induktionsheizleitungselementen 16h, insbesondere mit einer Anzahl an 30 Induktionsheizleitungselementen 16h, die eine maximale Quererstreckung von mindestens 0,26 mm, und insbesondere von im Wesentlichen 0,3 mm, aufweisen und zu einem Großteil aus Aluminium bestehen. Eine in Figur 22 durchgezogen dargestellte gemischte Verlaufskurve 94h3 repräsentiert eine Induktionsheizleitung 14h mit Induktionsheizleitungselementen 16h, insbesondere mit einer Anzahl an 64 Induktionsheizleitungselementen 16h, die eine maximale Quererstreckung von maximal 0,25 mm, und insbesondere von im Wesentlichen 0,2 mm, aufweisen und zu einem Großteil aus Kupfer bestehen, und mit Induktionsheizleitungselementen 16h, insbesondere mit einer Anzahl an 20 Induktionsheizleitungselementen 16h, die eine maximale Quererstreckung von mindestens 0,26 mm, und insbesondere von im Wesentlichen 0,3 mm, aufweisen und zu einem Großteil aus Aluminium bestehen. Eine in Figur 23 durchgezogen dargestellte gemischte Verlaufskurve 94h4 repräsentiert eine Induktionsheizleitung 14h mit Induktionsheizleitungselementen 16h, insbesondere mit einer Anzahl an 86 Induktionsheizleitungselementen 16h, die eine maximale Quererstreckung von maximal 0,25 mm, und insbesondere von im Wesentlichen 0,2 mm, aufweisen und zu einem Großteil aus Kupfer bestehen, und mit Induktionsheizleitungselementen 16h, insbesondere mit einer Anzahl an 10 Induktionsheizleitungselementen 16h, die eine maximale Quererstreckung von mindestens 0,26 mm, und insbesondere von im Wesentlichen 0,3 mm, aufweisen und zu einem Großteil aus Aluminium bestehen.

Aus den Figuren 20 bis 23 kann entnommen werden, dass die gemischte Verlaufskurve 94h jeweils zwischen der kleinen Verlaufskurve 92h und der großen Verlaufskurve 90h angeordnet ist. Insbesondere verschiebt sich die gemischte Verlaufskurve 94h mit steigendem Anteil an Induktionsheizelementen 16h, die eine kleine maximale Quererstreckung von maximal 0,25 mm aufweisen und zu einem Großteil aus Kupfer bestehen, und/oder mit steigendem Anteil an Induktionsheizelementen 16h, die eine maximale Quererstreckung von mindestens 0,26 mm, und insbesondere von im Wesentlichen 0,3 mm, aufweisen und zu einem Großteil aus Aluminium bestehen, in Richtung zu der großen Verlaufskurve 90h.

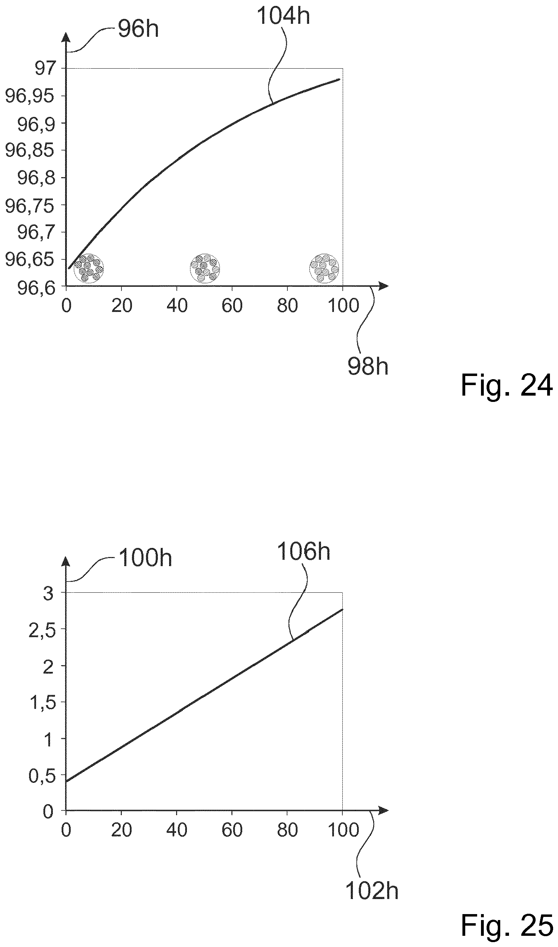

Die Figuren 24 und 25 zeigen wie durch geeignete Wahl und/oder Anpassung eines Heizleitungsparameters, welcher ein Material ist, eine Effizienz und Kosten der Induktionsheizeinheit 12h und/oder der Induktionsheizleitung 14h und/oder der Induktionsheizleitungselemente 16h eingestellt und/oder angepasst und/oder optimiert werden können, und zwar insbesondere für den Fall von Induktionsheizleitungselementen 16h, die eine maximale Quererstreckung von mindestens 0,26 mm aufweisen. In Figur 24 ist auf einer Ordinatenachse 96h eine Effizienz in der Einheit % aufgetragen. Auf einer Abszissenachse 98h ist in Figur 24 ein Anteil an Induktionsheizleitungselementen 16h in der Einheit % aufgetragen, die zu einem Großteil aus Kupfer bestehen. In Figur 25 sind auf einer Ordinatenachse 100h Kosten in der Einheit € aufgetragen. Auf einer Abszissenachse 102h ist in Figur 25 ein Anteil an Induktionsheizleitungselementen 16h in der Einheit % aufgetragen, die zu einem Großteil aus Kupfer bestehen. Aus Figur 24 kann anhand einer Verlaufskurve 104h entnommen werden, dass eine Effizienz mit steigendem Anteil an Induktionsheizleitungselementen 16h, die zu einem Großteil aus Kupfer bestehen, ansteigt, und zwar umso geringer umso größer ein Anteil an Induktionsheizleitungselementen 16h, die zu einem Großteil aus Kupfer bestehen, bereits ist. Aus Figur 25 kann anhand einer Verlaufskurve 106h entnommen werden, dass Kosten mit steigendem Anteil an Induktionsheizleitungselementen 16h, die zu einem Großteil aus Kupfer bestehen, linear ansteigen.

### Bezugszeichen

- 10: Induktionsgargerätevorrichtung
- 12: Induktionsheizeinheit
- 14: Induktionsheizleitung
- 16: Induktionsheizleitungselement
- 18: Maximale Quererstreckung
- 20: Induktionsgargerät
- 22: Gerätegrundplatte
- 24: Bedienerschnittstelle
- 26: Steuereinheit
- 28: Längsrichtung
- 30: Ordinatenachse
- 32: Abszissenachse
- 34: Ordinatenachse
- 36: Abszissenachse
- 38: Ordinatenachse
- 40: Abszissenachse
- 42: Ordinatenachse
- 44: Abszissenachse
- 46: Verlaufskurve
- 48: Verlaufskurve
- 50: Verlaufskurve
- 52: Ordinatenachse
- 54: Abszissenachse
- 56: Ordinatenachse
- 58: Abszissenachse
- 60: Ordinatenachse
- 62: Abszissenachse
- 64: Ordinatenachse
- 66: Abszissenachse
- 68: Verlaufskurve
- 70: Verlaufskurve
- 72: Verlaufskurve
- 74: Ordinatenachse
- 76: Abszissenachse
- 78: Ordinatenachse
- 80: Abszissenachse
- 82: Ordinatenachse
- 84: Abszissenachse
- 86: Ordinatenachse
- 88: Abszissenachse
- 90: Verlaufskurve
- 92: Verlaufskurve
- 94: Verlaufskurve
- 96: Ordinatenachse
- 98: Abszissenachse
- 100: Ordinatenachse
- 102: Abszissenachse
- 104: Verlaufskurve
- 106: Verlaufskurve

## Patentansprüche

1. Induktionsgargerätevorrichtung, insbesondere Induktionskochfeldvorrichtung, mit zumindest einer Induktionsheizeinheit (12a-h), welche zumindest zwei Induktionsheizleitungselemente (16a-h) aufweist, die Teil zumindest einer Induktionsheizleitung (14a-h) der Induktionsheizeinheit (12a-h) sind, **dadurch gekennzeichnet, dass** sich zumindest zwei der Induktionsheizleitungselemente (16a-h) wenigstens abschnittsweise in zumindest einem Heizleitungsparameter unterscheiden.

2. Induktionsgargerätevorrichtung nach Anspruch 1, **dadurch gekennzeichnet, dass** die Induktionsheizleitungselemente (16a-f; 16h) Teil einer gemeinsamen Induktionsheizleitung (14a-f; 14h) der Induktionsheizeinheit (12a-f; 12h) sind.

3. Induktionsgargerätevorrichtung nach Anspruch 1 oder 2, **dadurch gekennzeichnet, dass** sich zumindest zwei der Induktionsheizleitungselemente (16c-f; 16h) wenigstens abschnittsweise in zumindest einer maximalen Quererstreckung unterscheiden.

4. Induktionsgargerätevorrichtung nach einem der vorhergehenden Ansprüche, **dadurch gekennzeichnet, dass** zumindest eines der Induktionsheizleitungselemente (16a-h) wenigstens abschnittsweise eine maximale Quererstreckung von maximal 0,25 mm aufweist.

5. Induktionsgargerätevorrichtung nach Anspruch 4, **dadurch gekennzeichnet, dass** zumindest eines der Induktionsheizleitungselemente (16c-f; 16h) wenigstens abschnittsweise eine maximale Quererstreckung von mindestens 0,26 mm aufweist.

6. Induktionsgargerätevorrichtung nach einem der vorhergehenden Ansprüche, **dadurch gekennzeichnet, dass** sich zumindest zwei der Induktionsheizleitungselemente (16a-b; 16e-h) wenigstens abschnittsweise in zumindest einem Material unterscheiden.

7. Induktionsgargerätevorrichtung nach einem der vorhergehenden Ansprüche, **dadurch gekennzeichnet, dass** zumindest eines der Induktionsheizleitungselemente (16a-h) wenigstens abschnittsweise wenigstens zu einem Großteil aus Kupfer und/oder Aluminium besteht.

8. Induktionsgargerätevorrichtung nach einem der vorhergehenden Ansprüche, **dadurch gekennzeichnet, dass** sich zumindest eines der Induktionsheizleitungselemente (16a-h) über wenigstens im Wesentlichen eine gesamte Längserstreckung der Induktionsheizleitung (14a-h) erstreckt.

9. Induktionsgargerätevorrichtung nach einem der vorhergehenden Ansprüche, **dadurch gekennzeichnet, dass** zumindest zwei der Induktionsheizleitungselemente (16a-h) in wenigstens einem Betriebszustand wenigstens abschnittsweise miteinander verdrillt sind.

10. Induktionsgargerätevorrichtung nach einem der vorhergehenden Ansprüche, **dadurch gekennzeichnet, dass** die Induktionsheizleitung (14a; 14c; 14e) in zumindest einer Querschnittsebene eine kreisartige Gestalt aufweist.

11. Induktionsgargerätevorrichtung nach einem der Ansprüche 1 bis 9, **dadurch gekennzeichnet, dass** die Induktionsheizleitung (14b; 14d; 14f) in zumindest einer Querschnittsebene eine rechteckartige Gestalt aufweist.

12. Induktionsgargerät, insbesondere Induktionskochfeld, mit zumindest einer Induktionsgargerätevorrichtung nach einem der vorhergehenden Ansprüche.

13. Verfahren zu einer Montage einer Induktionsgargerätevorrichtung (16a-h), insbesondere nach einem der Ansprüche 1 bis 11, bei welchem zumindest zwei Induktionsheizleitungselemente (16a-h), welche sich in zumindest einem Heizleitungsparameter unterscheiden, zu einer Bildung zumindest einer Induktionsheizleitung (14a-h) miteinander verdrillt werden.
